# EUROPEAN PATENT APPLICATION

(11) **EP 4 737 155 A1**
(43) Date of publication of application: **06.05.2026**
(21) Application number: 24210091.5
(22) Date of filing: 31.10.2024
(51) Int. Cl.: B60K 1/04

(54) **BATTERY MOUNTING DEVICE FOR A VEHICLE**

(71) Applicant: Volvo Truck Corporation, 405 08 Göteborg (SE)
(72) Inventor: SINGH, Ranjeet, 482001 MADHYA PRADESH (IN); MANDAL, Goutam, 732121 WEST BENGAL (IN); BISWAS, Sanjoy, 743706 WEST BENGAL (IN); KUMAR, Amit, 844101 INDIA/BIHAR (IN)
(74) Representative: Ström & Gulliksson AB

(57) **Abstract**

A battery mounting device for a vehicle includes a front bracket for mounting to a vehicle chassis, the front bracket including a front facing curved barrier portion for guiding air around the battery mounting device. The battery mounting device further includes a rear bracket for mounting to the vehicle chassis comprising a rear facing curved barrier portion for guiding air away from the battery mounting device. The battery mounting device further includes a support plate coupled between the front bracket and the rear bracket for mounting a vehicle battery between the front facing curved portion of the front bracket and the rear facing curved portion of the rear bracket.

## Description

### TECHNICAL FIELD

The disclosure relates generally to a battery mounting device. In particular aspects, the disclosure relates to a modular, aerodynamic battery mounting device for a vehicle. The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

Many conventional heavy electric vehicles include batteries mounted on external sides of a chassis in a cantilevered arrangement, which may result in the battery protruding into an airflow around the vehicle, which may result in air drag and energy loss. In addition, positioning batteries on the exterior sides of the vehicle may expose the batteries to additional risks from potential side impacts. This arrangement also exposes the batteries and mounting brackets to high structural vibrations from the chassis during operation. There is a need for a battery mounting solution that addresses these and other issues.

### SUMMARY

According to a first aspect of the disclosure, a battery mounting device for a vehicle includes a front bracket for mounting to a vehicle chassis, the front bracket including a front facing curved barrier portion for guiding air around the battery mounting device. The battery mounting device further includes a rear bracket for mounting to the vehicle chassis comprising a rear facing curved barrier portion for guiding air away from the battery mounting device. The battery mounting device further includes a support plate coupled between the front bracket and the rear bracket for mounting a vehicle battery between the front facing curved portion of the front bracket and the rear facing curved portion of the rear bracket. The first aspect of the disclosure may seek to reduce aerodynamic drag on the battery. A technical benefit may include improved aerodynamic performance for the vehicle.

Optionally in some examples, including in at least one preferred example, the front facing curved barrier portion comprises a front facing convex protrusion.

Optionally in some examples, including in at least one preferred example, the rear facing curved barrier portion comprises a rear facing convex protrusion.

Optionally in some examples, including in at least one preferred example, the front facing curved barrier portion and the rear facing curved barrier define an airstream path around the vehicle battery when the vehicle battery is mounted to the support plate.

Optionally in some examples, including in at least one preferred example, the front bracket comprises a first plurality of holes for accommodating a fastener, the rear bracket comprises a second plurality of holes for accommodating a fastener, and the support plate comprises a plurality of slots aligned with the first plurality of holes of the front bracket for accommodating a fastener therethrough and aligned with the second plurality of holes of the rear bracket for accommodating a fastener therethrough.

Optionally in some examples, including in at least one preferred example, the plurality of slots comprises a first longitudinally spaced subset of slots for aligning with the first plurality of holes and a second longitudinally spaced subset of slots for aligning with the second plurality of holes.

Optionally in some examples, including in at least one preferred example, the first plurality of holes comprises longitudinally spaced first subsets of holes for aligning with the first longitudinally spaced subset of slots to selectively position the support plate at a plurality of different longitudinal positions with respect to the front bracket.

Optionally in some examples, including in at least one preferred example, the second plurality of holes comprises longitudinally spaced second subsets of holes for aligning with the second longitudinally spaced subset of slots to selectively position the support plate at a plurality of different longitudinal positions with respect to the rear bracket.

Optionally in some examples, including in at least one preferred example, the battery mounting device further includes a plurality of spacer brackets, each spacer bracket aligned with at least one slot of the support plate and at least one hole of one of the front bracket and the rear bracket.

Optionally in some examples, including in at least one preferred example, each spacer bracket comprises at least one protrusion extending into the at least one slot of the support plate to define a circular passage through the at least one slot and the at least one hole.

Optionally in some examples, including in at least one preferred example, the battery mounting bracket further includes a plurality of rivets, each rivet extending through one of the circular passages defined by the at least one spacer bracket to fix the spacer bracket and the support plate to the one of the front bracket and the rear bracket.

Optionally in some examples, including in at least one preferred example, the front bracket further comprises a front fastening plate comprising at least one hole for fixing the battery mounting device to the vehicle chassis, and the rear bracket further comprises a rear fastening plate comprising at least one hole for fixing the battery mounting device to the vehicle chassis.

Optionally in some examples, including in at least one preferred example, the battery mounting device further includes a plurality of bushings extending through each of the at least one hole of the front fastening plate and the at least one hole of the rear fastening plate, each bushing of the plurality of bushings comprising an elastic bushing portion for accommodating a fastener therethrough for resisting longitudinal displacement of the battery mounting device with respect to the chassis, and a spring disposed around the elastic bushing portion between the battery mounting device and the chassis for resisting lateral displacement of the battery mounting device with respect to the chassis.

According to a second aspect of the disclosure, a battery mounting device for a vehicle includes a front bracket for mounting to a vehicle chassis, the front bracket comprising a first plurality of holes for accommodating a fastener. The battery mounting device further includes a rear bracket for mounting to the vehicle chassis, the rear bracket comprising a second plurality of holes for accommodating a fastener. The battery mounting device further includes a support plate for a vehicle battery coupled between the front bracket and the rear bracket, the support plate comprising a first plurality of slots aligned with the first plurality of holes of the front bracket for accommodating a fastener therethrough and second plurality of slots aligned with the second plurality of holes of the rear bracket for accommodating a fastener therethrough. The second aspect of the disclosure may seek to reduce aerodynamic drag on the battery. A technical benefit may include a modular mounting arrangement for improved aerodynamic performance for vehicles using different types and sizes of batteries.

According to a third aspect of the disclosure, a battery mounting device for a vehicle includes a support plate for a vehicle battery. The battery mounting device further includes a bracket coupled to the support plate for mounting to a vehicle chassis, the bracket comprising a plurality of holes for accommodating a fastener. The battery mounting device further includes a plurality of bushings disposed in the plurality of holes. Each bushing includes an elastic bushing portion for accommodating a fastener therethrough for resisting longitudinal displacement of the battery mounting device with respect to the chassis, and a spring disposed around the elastic bushing portion between the battery mounting device and the chassis for resisting lateral displacement of the battery mounting device with respect to the chassis. The third aspect of the disclosure may seek to reduce vibrations on the battery. A technical benefit may include improved vibration isolation fora vehicle mounted battery.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

### BRIEF DESCRIPTION OF THE DRAWINGS

Examples are described in more detail below with reference to the appended drawings.
FIG. 1 is an exemplary electric heavy truck with an improved battery mounting arrangement, according to an example.
FIGS. 2A-2C are detailed views of the battery mounting arrangement of FIG. 1, according to an example.
FIG. 3 is a top view of an alternative battery mounting arrangement, according to an example.
FIGS. 4A and 4B are detailed views of a spacer bracket of FIG. 3, according to an example.
FIG. 5 is a cutaway view of the spacer bracket of FIGS. 4A-4B, according to an example.
FIG. 6 is a side view of the battery mounting arrangement of FIGS. 1-3, according to an example.
FIG. 7, a side cutaway view of a bushing for securing the front fastening plate of the battery mounting device to the vehicle chassis, according to an example.

### DETAILED DESCRIPTION

The detailed description set forth below provides information and examples of the disclosed technology with sufficient detail to enable those skilled in the art to practice the disclosure.

As discussed above, many conventional battery mounting arrangements for heavy trucks and other vehicles may result in undesired air drag, side impact risk, and structural vibrations on the batteries and mounting brackets. To address these and other technical problems, embodiments provide a modular, aerodynamic, vibration resistant, and crash resistant battery mounting arrangement that reduces vibration transmission and noise, and that improves fuel economy and structural durability of the vehicle.

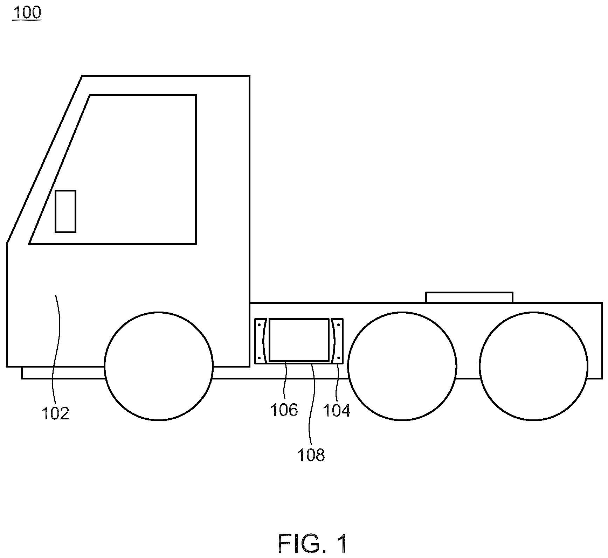

In this regard, FIG. 1 is an exemplary electric heavy truck 100 with an improved battery mounting arrangement, according to an example. In this example, the truck 100 may include a cab 102 and a vehicle chassis 104, with a vehicle battery 106 and/or other type of energy storage device mounted thereto using an improved battery mounting device 108.

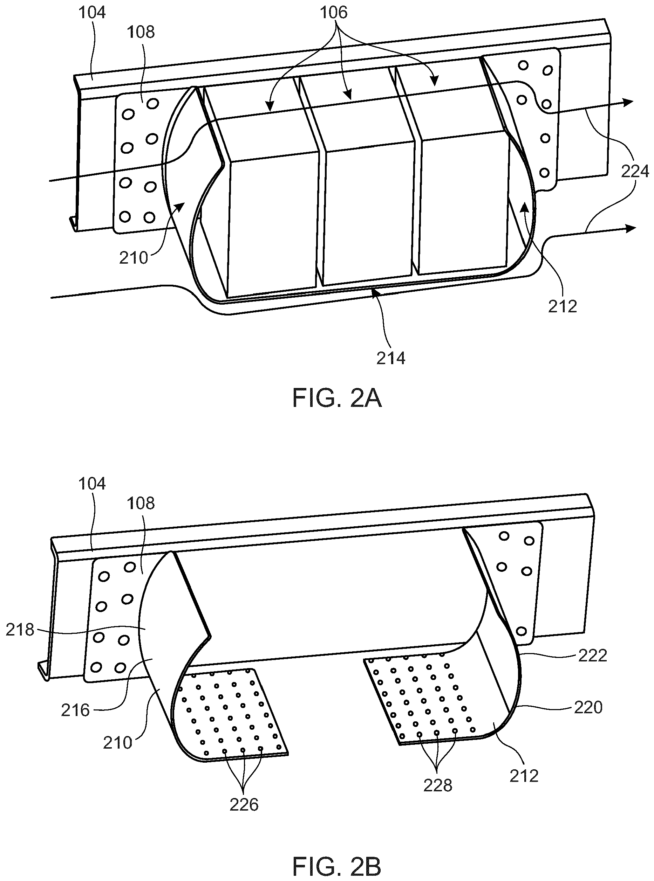

Referring now to FIGS. 2A-2C, a detailed view of the battery mounting device 108 is illustrated. According to one aspect of the present embodiment, at least a portion of the battery mounting device 108 is mounted to the vehicle chassis 104. As shown by FIG. 2A, the battery mounting device 108 may include a front bracket 210 for mounting to the vehicle chassis 104, a rear bracket 212 for mounting to the vehicle chassis 104, and FIG. 2B illustrates a support plate 214 coupled between the front bracket 210 and the rear bracket 212 for mounting the vehicle battery 106. The front bracket 210 includes a front facing curved barrier portion 216 including a front facing convex protrusion 218 for guiding air around the battery mounting device 108, and the rear bracket 212 includes a rear facing curved barrier portion 220 including a rear facing convex protrusion 222 for guiding air away from the battery mounting device 108.

As shown in FIG. 2B, the support plate 214 is mounted between the front facing curved barrier portion 216 of the front bracket 210 and the rear facing curved barrier portion 220 of the rear bracket 212. In this manner, the front facing curved barrier portion 216 of the front bracket 210 and the rear facing curved barrier portion 220 of the rear bracket 212 define an airstream path 224 around the vehicle battery 106 when the vehicle battery 106 is mounted to the support plate 214.

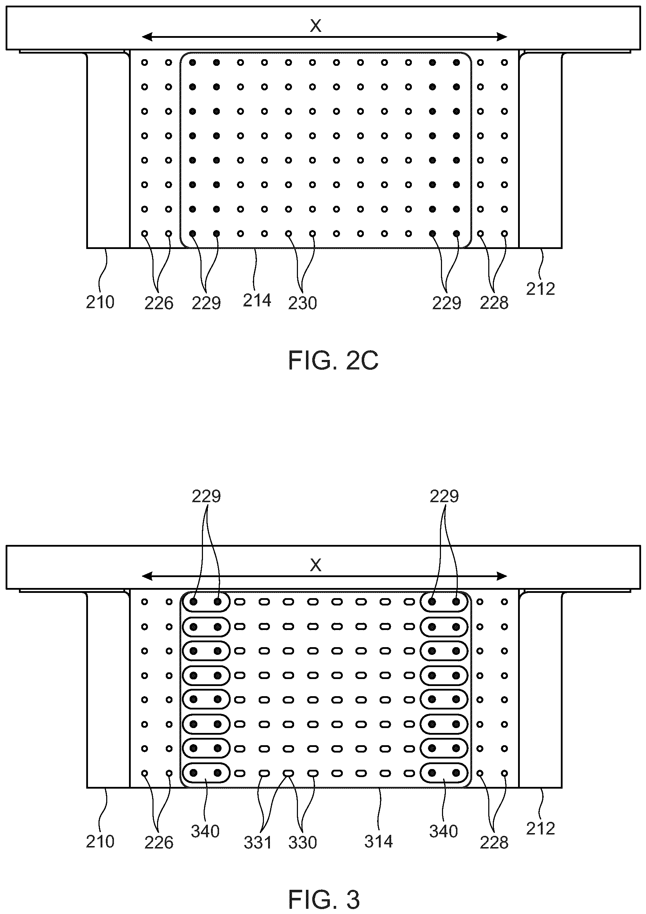

As shown by FIGS. 2B and 2C, the front bracket 210 includes a first plurality of holes 226 for accommodating a fastener, and the rear bracket 212 includes a second plurality of holes 228 for accommodating a fastener. Also shown, the support plate 214 includes a plurality of holes 330 aligned with the first plurality of holes 226 of the front bracket 210 and aligned with the second plurality of holes 228 of the rear bracket 212. Advantageously, the aligned holes 330, 226, and 228, receive a fastener (give a number to this and show in the figures) for fixedly securing the support plate 214 to the front and rear brackets 210, 212.

As shown, the plurality of holes 230 may be a longitudinally spaced subsets of elongated slots for aligning with corresponding longitudinally spaced subsets of the first plurality of holes 226 and the second plurality of holes 228, to selectively position the support plate 214 at a plurality of different longitudinal positions with respect to the front bracket 210 and/or rear bracket 212. The aligned subsets of holes 226, 228, 330

In this manner, the longitudinal length of the battery mounting device 108, i.e., the longitudinal distance between the front bracket 210 and the rear bracket 212, can be adjusted to accommodate different battery sizes and types, and/or different chassis arrangements, as desired. This allows for the same front bracket 210 and rear bracket 212 to be used for a variety of different configurations. In addition, in some examples, the same support plate 214 can also be used for a variety of different configurations having different lengths, by fastening different subsets of holes 330 of the support plate with different subsets of holes 226 of the front bracket 210 and/or subsets of holes 228 of the rear bracket 212, e.g., using fasteners 229 such as rivets, bolts, or other types of fasteners, as desired.

Turning now to FIG 3, in this alternative embodiment, the plurality of holes 330 of an alternative support plate 314 may be longitudinally spaced subsets of elongated slots 331 for aligning with corresponding longitudinally spaced subsets of the first plurality of holes 226 and the second plurality of holes 228 of the front bracket 210 and the rear bracket 212, to selectively position the support plate 214 at a plurality of different longitudinal positions with respect to the front bracket 210 and/or rear bracket 212 with greater precision.

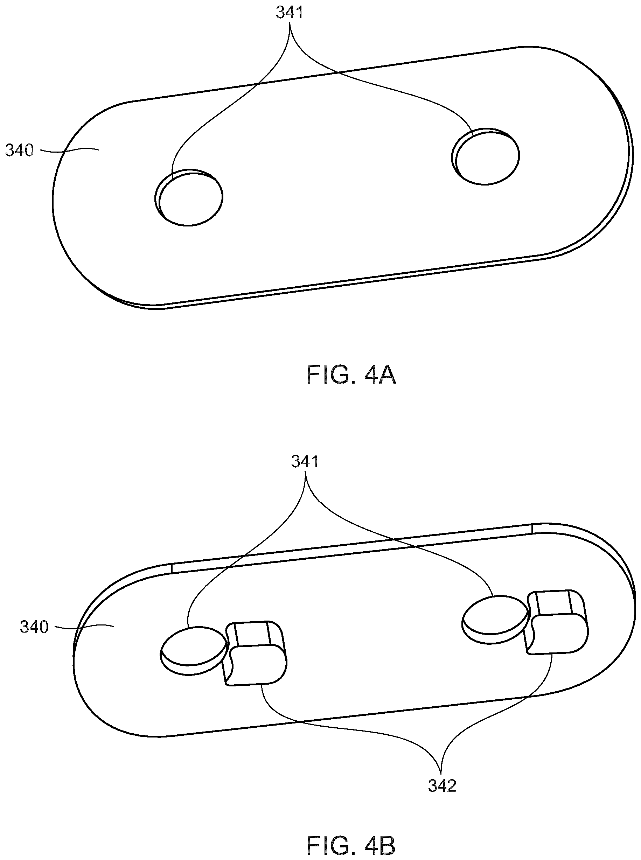

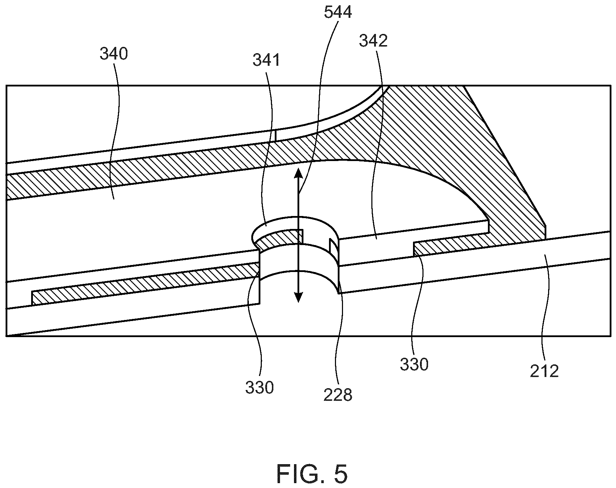

In this example, a plurality of spacer brackets 340 are also provided, with each spacer bracket 340 aligned with at least one hole 330 of the support plate 214 and at least one hole 326, 328 of one of the front bracket 210 and/or the rear bracket 212. Referring now to FIGS. 4A and 4B, each spacer bracket 340 includes at least one hole 341 and at least one protrusion 442 adjacent the hole 341 for extending into the at least one hole 330 of the support plate 214. As shown by the cutaway view of FIG. 5, the protrusion 442 of the spacer bracket 340 extends into the hole 330 of the support plate 214 and defines a circular passage 544 through the slot 330 of the support plate 214 and the corresponding hole 338 of the rear bracket 212 (and/or a corresponding hole 336 of the front bracket 210, as desired).

In this example, one or more fasteners 546 may extend through one or more of the circular passages 544 defined by the at least one spacer bracket 340 to fix the spacer bracket 340 and the support plate 214 to the one of the front bracket 210 and/or the rear bracket 212. In this example, the fastener 546 is a rivet 548, but other types of fasteners, such as bolts, etc., may be used. Rivets in particular provide a low cost, secure connection between the support plate 214 and the front bracket 210 and/or the rear bracket 212, but are less suited to slotted passages, in part because rivets provide relatively low compression against the components, which may result in unwanted movement of the support plate 214 with respect to the front bracket 210 and/or the rear bracket 212. By using the spacer brackets 340 to provide circular passages 544, however, relative movement of the support plate 214 with respect to the front bracket 210 and/or the rear bracket 212 is prevented, and the benefits of using rivets may be realized without the above-mentioned drawbacks.

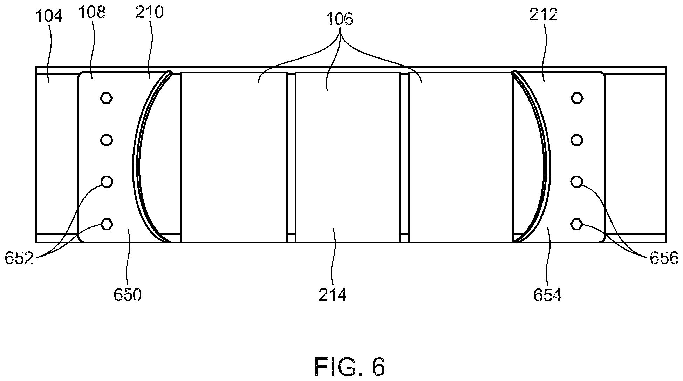

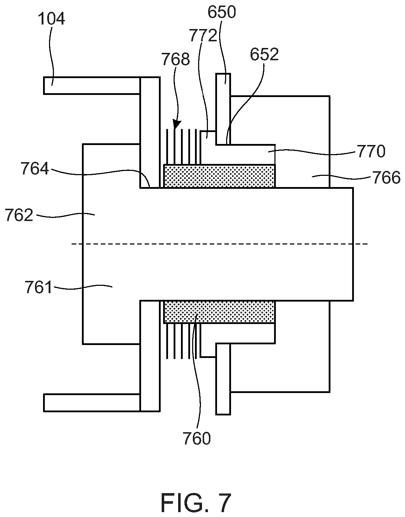

Referring now to FIG. 6, a side view of the battery mounting device 108 is illustrated. In this example, the front bracket 210 further includes a front fastening plate 650 including one or more holes 652 for fixing the battery mounting device 108 to the vehicle chassis 104. The rear bracket 212 also further includes a rear fastening plate 654 including at one or more holes 656 for fixing the battery mounting device 108 to the vehicle chassis 104. As will be described below with respect to FIG. 7, a plurality of bushings extend through each of hole 652 of the front fastening plate 650 and each hole 656 of the rear fastening plate 654.

Referring now to FIG. 7, a side cutaway view of a bushing 758 for securing the front fastening plate 650 (and/or the rear fastening plate 654) to the vehicle chassis 104 is illustrated. Each bushing 758 includes an elastic bushing portion 760 extending through the hole 652 for accommodating a fastener 761 therethrough for resisting longitudinal displacement of the battery mounting device 108 with respect to the vehicle chassis 104. In this example, the fastener 761 includes a bolt 762 extending through a chassis hole 764 and a corresponding hole 652 of the front fastening plate 650 (and/or a corresponding hole 656 of the rear fastening plate 654), secured by a nut 766. Each bushing 758 further includes a spring 768 disposed around the elastic bushing portion 760 between the battery mounting device 108 and the vehicle chassis 104 for resisting lateral displacement of the battery mounting device 108 with respect to the vehicle chassis 104. In this example, a metal bushing portion 770 is optionally disposed in the hole 652 with a flange portion 772 disposed between the spring 768 and the front fastening plate 650 (and/or a corresponding hole 656 of the rear fastening plate 654) to provide further structural stability to the bushing 758.

Additional examples include:
Example 1. A battery mounting device for a vehicle comprising:
   a front bracket for mounting to a vehicle chassis, the front bracket comprising a front facing curved barrier portion for guiding air around the battery mounting device;
   a rear bracket for mounting to the vehicle chassis comprising a rear facing curved barrier portion for guiding air away from the battery mounting device; and
   a support plate coupled between the front bracket and the rear bracket for mounting a vehicle battery between the front facing curved portion of the front bracket and the rear facing curved portion of the rear bracket.
Example 2. The battery mounting device of example 1, wherein the front facing curved barrier portion comprises a front facing convex protrusion.
Example 3. The battery mounting device of example 1 or 2, wherein the rear facing curved barrier portion comprises a rear facing convex protrusion.
Example 4. The battery mounting device of any preceding example, wherein the front facing curved barrier portion and the rear facing curved barrier define an airstream path around the vehicle battery when the vehicle battery is mounted to the support plate.
Example 5. The battery mounting device of any preceding example, wherein
   the front bracket comprises a first plurality of holes for accommodating a fastener;
   the rear bracket comprises a second plurality of holes for accommodating a fastener; and
   the support plate comprises a plurality of slots aligned with the first plurality of holes of the front bracket for accommodating a fastener therethrough and aligned with the second plurality of holes of the rear bracket for accommodating a fastener therethrough.
Example 6. The battery mounting device of example 5, wherein the plurality of slots comprises a first longitudinally spaced subset of slots for aligning with the first plurality of holes and a second longitudinally spaced subset of slots for aligning with the second plurality of holes.
Example 7. The battery mounting device of example 6, wherein the first plurality of holes comprises longitudinally spaced first subsets of holes for aligning with the first longitudinally spaced subset of slots to selectively position the support plate at a plurality of different longitudinal positions with respect to the front bracket.
Example 8. The battery mounting device of examples 6 or 7, wherein the second plurality of holes comprises longitudinally spaced second subsets of holes for aligning with the second longitudinally spaced subset of slots to selectively position the support plate at a plurality of different longitudinal positions with respect to the rear bracket.
Example 9. The battery mounting device of example 6, further comprising a plurality of spacer brackets, each spacer bracket aligned with at least one slot of the support plate and at least one hole of one of the front bracket and the rear bracket.
Example 10. The battery mounting device of example 9, wherein each spacer bracket comprises at least one protrusion extending into the at least one slot of the support plate to define a circular passage through the at least one slot and the at least one hole.
Example 11. The battery mounting device of example 10, further comprising a plurality of rivets, each rivet extending through one of the circular passages defined by the at least one spacer bracket to fix the spacer bracket and the support plate to the one of the front bracket and the rear bracket.
Example 12. The battery mounting device of example 1, wherein the front bracket further comprises a front fastening plate comprising at least one hole for fixing the battery mounting device to the vehicle chassis, and
   wherein the rear bracket further comprises a rear fastening plate comprising at least one hole for fixing the battery mounting device to the vehicle chassis.
Example 13. The battery mounting device of example 12, further comprising a plurality of bushings extending through each of the at least one hole of the front fastening plate and the at least one hole of the rear fastening plate, each bushing of the plurality of bushings comprising:
   an elastic bushing portion for accommodating a fastener therethrough for resisting longitudinal displacement of the battery mounting device with respect to the chassis; and
   a spring disposed around the elastic bushing portion between the battery mounting device and the chassis for resisting lateral displacement of the battery mounting device with respect to the chassis.
Example 14. A battery mounting device for a vehicle comprising:
   a front bracket for mounting to a vehicle chassis, the front bracket comprising a first plurality of holes for accommodating a fastener;
   a rear bracket for mounting to the vehicle chassis, the rear bracket comprising a second plurality of holes for accommodating a fastener; and
   a support plate for a vehicle battery coupled between the front bracket and the rear bracket, the support plate comprising a first plurality of slots aligned with the first plurality of holes of the front bracket for accommodating a fastener therethrough and second plurality of slots aligned with the second plurality of holes of the rear bracket for accommodating a fastener therethrough.
Example 15. A battery mounting device for a vehicle comprising:
   a support plate for a vehicle battery;
   a bracket coupled to the support plate for mounting to a vehicle chassis, the bracket comprising a plurality of holes for accommodating a fastener; and
   a plurality of bushings disposed in the plurality of holes, each bushing comprising:
   an elastic bushing portion for accommodating a fastener therethrough for resisting longitudinal displacement of the battery mounting device with respect to the chassis; and
   a spring disposed around the elastic bushing portion between the battery mounting device and the chassis for resisting lateral displacement of the battery mounting device with respect to the chassis.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A battery mounting device (108) for a vehicle (100) comprising:
a front bracket (210) for mounting to a vehicle chassis (104), the front bracket (210) comprising a front facing curved barrier portion (216) for guiding air around the battery mounting device (108);
a rear bracket (212) for mounting to the vehicle chassis (104) comprising a rear facing curved barrier portion (220) for guiding air away from the battery mounting device (108); and
a support plate (214) coupled between the front bracket (210) and the rear bracket (212) for mounting a vehicle battery (106) between the front facing curved barrier portion (216) of the front bracket (210) and the rear facing curved barrier portion (220) of the rear bracket (212).

2. The battery mounting device (108) of claim 1, wherein the front facing curved barrier portion (216) comprises a front facing convex protrusion (218).

3. The battery mounting device (108) of claim 1 or 2, wherein the rear facing curved barrier portion (220) comprises a rear facing convex protrusion (222).

4. The battery mounting device (108) of any preceding claim, wherein the front facing curved barrier portion (216) and the rear facing curved barrier portion (220) define an airstream path (224) around the vehicle battery (106) when the vehicle battery (106) is mounted to the support plate (214).

5. The battery mounting device (108) of any preceding claim, wherein
the front bracket (210) comprises a first plurality of holes (226) for accommodating a fastener;
the rear bracket (212) comprises a second plurality of holes (228) for accommodating a fastener; and
the support plate (214) comprises a plurality of slots aligned with the first plurality of holes (226) of the front bracket (210) for accommodating a fastener therethrough and aligned with the second plurality of holes (228) of the rear bracket (212) for accommodating a fastener therethrough.

6. The battery mounting device (108) of claim 5, wherein the plurality of slots comprises a first longitudinally spaced subset of slots for aligning with the first plurality of holes (226) and a second longitudinally spaced subset of slots for aligning with the second plurality of holes (228).

7. The battery mounting device (108) of claim 6, wherein the first plurality of holes (226) comprises longitudinally spaced first subsets of holes for aligning with the first longitudinally spaced subset of slots to selectively position the support plate (214) at a plurality of different longitudinal positions with respect to the front bracket (210).

8. The battery mounting device (108) of claims 6 or 7, wherein the second plurality of holes (228) comprises longitudinally spaced second subsets of holes for aligning with the second longitudinally spaced subset of slots to selectively position the support plate (214) at a plurality of different longitudinal positions with respect to the rear bracket (212).

9. The battery mounting device (108) of claim 6, further comprising a plurality of spacer brackets (340), each spacer bracket (340) aligned with at least one slot of the support plate (214) and at least one hole (226, 228) of one of the front bracket (210) and the rear bracket (212).

10. The battery mounting device (108) of claim 9, wherein each spacer bracket (340) comprises at least one protrusion (442) extending into the at least one slot of the support plate (214) to define a circular passage (554) through the at least one slot and the at least one hole (226, 228).

11. The battery mounting device (108) of claim 10, further comprising a plurality of rivets (548), each rivet (548) extending through one of the circular passages (554) defined by the at least one spacer bracket (340) to fix the spacer bracket (340) and the support plate (214) to the one of the front bracket (210) and the rear bracket (212).

12. The battery mounting device (108) of any preceding claim, wherein the front bracket (210) further comprises a front fastening plate (650) comprising at least one hole (652) for fixing the battery mounting device (108) to the vehicle chassis (104), and
wherein the rear bracket (212) further comprises a rear fastening plate (654) comprising at least one hole (656) for fixing the battery mounting device (108) to the vehicle chassis (104).

13. The battery mounting device (108) of claim 12, further comprising a plurality of bushings (758) extending through each of the at least one hole (652) of the front fastening plate (650) and the at least one hole (656) of the rear fastening plate (654), each bushing (758) of the plurality of bushings (758) comprising:
an elastic bushing portion (760) for accommodating a fastener (761) therethrough for resisting longitudinal displacement of the battery mounting device (108) with respect to the chassis; and
a spring disposed around the elastic bushing portion (760) between the battery mounting device (108) and the vehicle chassis (104) for resisting lateral displacement of the battery mounting device (108) with respect to the vehicle chassis (104).

14. A battery mounting device (108) for a vehicle (100) comprising:
a front bracket (210) for mounting to a vehicle chassis (104), the front bracket (210) comprising a first plurality of holes (226) for accommodating a fastener;
a rear bracket (212) for mounting to the vehicle chassis (104), the rear bracket (212) comprising a second plurality of holes (228) for accommodating a fastener; and
a support plate (214) for a vehicle battery (106) coupled between the front bracket (210) and the rear bracket (212), the support plate (214) comprising a first plurality of slots aligned with the first plurality of holes (226) of the front bracket (210) for accommodating a fastener therethrough and second plurality of slots aligned with the second plurality of holes (228) of the rear bracket (212) for accommodating a fastener therethrough.

15. A battery mounting device (108) for a vehicle (100) comprising:
a support plate (214) for a vehicle battery (106);
a bracket (210; 212) coupled to the support plate (214) for mounting to a vehicle chassis (104), the bracket (210; 212) comprising a plurality of holes (226; 228) for accommodating a fastener; and
a plurality of bushings (758) disposed in the plurality of holes (226; 228), each bushing (758) comprising:
an elastic bushing portion (760) for accommodating a fastener (761) therethrough for resisting longitudinal displacement of the battery mounting device (108) with respect to the vehicle chassis (104); and
a spring (768) disposed around the elastic bushing portion (760) between the battery mounting device (108) and the vehicle chassis (104) for resisting lateral displacement of the battery mounting device (108) with respect to the vehicle chassis (104).
